# EUROPÄISCHE PATENTANMELDUNG

(11) **EP 0 806 642 A1**
(43) Veröffentlichungstag der Anmeldung: **12.11.1997**
(21) Anmeldenummer: 97104922.6
(22) Anmeldetag: 22.03.1997
(51) Int. Cl.: G01K 11/32, B64D 13/00, G01K 1/02, G01K 3/06

(54) **Verfahren und Anordnung zur Temperaturerfassung in Räumen, insbesondere in Passagier- oder Frachträumen in Flugzeugen**

(30) Priorität: 09.05.1996 DE 19618685
(71) Anmelder: Daimler-Benz Aerospace Airbus Gesellschaft mit beschränkter Haftung, 21129 Hamburg (DE)
(72) Erfinder: Merzbacher, Carsten, Dipl.-Ing., 21629 Neu Wulmstorf (DE); Wienert, Willi, Dipl.-Ing., 21073 Hamburg (DE)
(74) Vertreter: Hansmann, Dierk, Dipl.-Ing.

(57) **Zusammenfassung**

Bei einem Verfahren/einer Anordnung zum Temperaturerfassen in Räumen, insbesondere in Passagier- oder Frachträumen in Flugzeugen, wobei über mindestens eine Sensoreinrichtung Meßwerte erfaßt werden, die einer zugeordneten Temperaturregeleinheit zur Verfügung gestellt werden, besteht die Erfindung darin, daß in die als ein Lichtleitkabel ausgebildete Sensoreinrichtung über eine Sensorschnittstelle Lichtimpulse eingespeist werden, die durch den eingespeisten Impuls auftretenden Reflexionen in ihrer Stärke und Zeitdifferenz erfaßt werden, die Meßwerte einer Meß- und Auswerteeinrichtung übergeben werden, in der Meß- und Auswerteeinrichtung die Höhe der Temperaturänderung und den Ort der Temperaturänderung längs des Kabels ermittelt wird und der zugeordneten Temperaturregeleinheit die Werte übergeben werden.

Dabei ist insbesondere von Vorteil, daß an beliebig vielen Stellen entlang des Kabels die Temperatur im Raum ermittelt werden kann und es möglich ist, eine Positionsveränderung der Meßorte vorzunehmen, ohne daß eine Kabelverlegung mit dem dabei auftretenden hohen Installationsaufwand notwendig wird.

## Beschreibung

Die Erfindung betrifft ein Verfahren und eine Anordnung zum Temperaturerfassen in Räumen, insbesondere in Passagier- oder Frachträumen in Flugzeugen, wobei über mindestens eine Sensoreinrichtung Meßwerte erfaßt werden, die einer zugeordneten Temperaturregeleinheit zur Verfügung gestellt werden.

Für eine Temperaturregelung in Passagierkabinenbereichen oder in Frachträumen in Flugzeugen ist es unter anderem aus DE 43 08 466 C1 bekannt, daß zur Erfassung der Temperatur einzelne Temperatursensoren verwendet werden, die innerhalb des Raumes angeordnet sind, dessen Temperatur zu messen ist.

Zur Temperaturerfassung sind insbesondere Widerstandsthermometer, Thermoelemente oder Halbleiter(NTC/PTC)-Sensoren bekannt, die den Meßwert über Meßleitungen einer Temperaturregelung zur Verfügung stellen. Insbesondere in den Passagierkabinen ist es aus Komfortgründen von besonderer Bedeutung, daß vorgegebene Kabinentemperaturen eingehalten werden und somit das Wohlbefinden der Passagiere gesteigert wird. Eine Temperaturregelung, die diesen Anforderungen gerecht wird, ist aber nur möglich, wenn die Temperatur in den Räumen umfassend und hinreichend genau erfaßt wird. Schwierig gestaltet sich dies, da beispielsweise zum Teil die temperierte Luft punktuell zu- und abgeführt wird, eine Luftverteilung duch Trennwände behindert wird oder es aufgrund der unterschiedlichen Sitzdichte in den einzelnen Passagierklassen zu unterschiedlichen Wärmelasten kommt. Neben vielfältigen weiteren Einflüssen führen die genannten Einflüsse zu einer unterschiedlichen Temperaturverteilung innerhalb einer Passagierkabine. Somit ist eine Anordnung einer Vielzahl von Sensoren im Raum notwendig, um die Temperatur optimal zu erfassen und eine den jeweiligen Wärmelasten angepaßte und optimierte Temperaturregelung zu ermöglichen. Aus wirtschaftlichen Gründen wird die Anzahl der Meßsensoren aber minimiert, da der zur Temperaturerfassung benötigte Montage- und Wartungsaufwand so gering wie möglich gehalten werden soll. Auch bei Veränderungen des Sitzlayouts in den Räumen sind Einbauort- bzw. auch Einbauart der Sensoren gegebenenfalls zu ändern und anzupassen und die entsprechenden Kabelverlegungen vorzunehmen, um eine weitgehend korrekte Temperaturerfassung sicherzustellen. Dies ist aber nur mit einem zusätzlichen Installations- und Konstruktionsaufwand möglich.

Demgemäß liegt der Erfindung die Aufgabe zugrunde, ein gattungsgemäßes Verfahren und eine gattungsgemäße Anordnung derart auszubilden, daß eine kostengünstige und wartungsarme Temperaturmessung innerhalb des zu erfassenden Raumes erreicht wird, die umfassend und hinreichend genau die Wärmelasten im Raum erkennt und entsprechende Informationen an die Temperaturregelung übergibt. Auf Veränderungen bei der Temperaturverteilung im zu erfassenden Raum muß schnell und flexibel ohne zusätzliche Kabelverlegungen reagiert werden können.

Diese Aufgabe wird mit den in Patentanspruch 1 bzw. 2 angegebenen Maßnahmen gelöst.

Dabei ist insbesondere von Vorteil, daß mit der erfindungsgemäßen Lösung an beliebig vielen Stellen entlang des Kabels die Temperatur im Raum ermittelt werden kann und es möglich ist, eine Positionsveränderung der Meßorte vorzunehmen, ohne daß eine Kabelverlegung mit dem dabei auftretenden hohen Installationsaufwand notwendig wird.

Weiterbildungen und zweckmäßige Ausgestaltungen ergeben sich aus den Unteransprüchen 3 - 6.

Die Erfindung wird nachstehend beschrieben, wobei die Anordnung und das Verfahren zum Temperaturerfassen anhand der Zeichnung näher erläutert wird.

Die Zeichnung zeigt
- in Fig. 1: eine schematische Darstellung einer Anordnung zum Temperaturerfassen in Räumen,
- in Fig. 2: eine Darstellung des in ein Glasfaserkabel eingespeisten Lichtimpulses im Leistungs-Zeit-Diagramm und
- in Fig. 3: eine Darstellung des in ein Glasfaserkabel eingespeisten Lichtimpulses im Leistungs-Zeit-Diagramm bei einer Temperaturveränderung.

Das Temperaturerfassen in Räumen erfolgt erfindungsgemäß mittels einer aus einem Glasfaserkabel 3 aufgebauten Sensoreinrichtung 1, die zumindest bereichsweise einen zu erfassenden Bereich durchläuft. Um die Temperatur in einem zu erfassenden Raum 2 hinreichend genau zu messen, ist das Glasfaserkabel 3 als Schleife in diesem Raum 2 so verlegt, daß ein größtmöglicher Bereich des Raumes 2 temperaturmäßig erfaßt werden kann. Für die korrekte Erfassung der Meßwerte ist das Glasfaserkabei 3 so verlegt, das ein direkter Kontakt mit der Umgebungsluft erreicht wird. Vorzugsweise erfolgt die Verlegung an der Oberfläche der Einrichtungsgegenstände innerhalb des Raumes 2, wobei möglichst eine thermische Isolation des Kabels bzw. ein Verlegen an nicht wärmeabgebenden Bauteilen erfolgt.

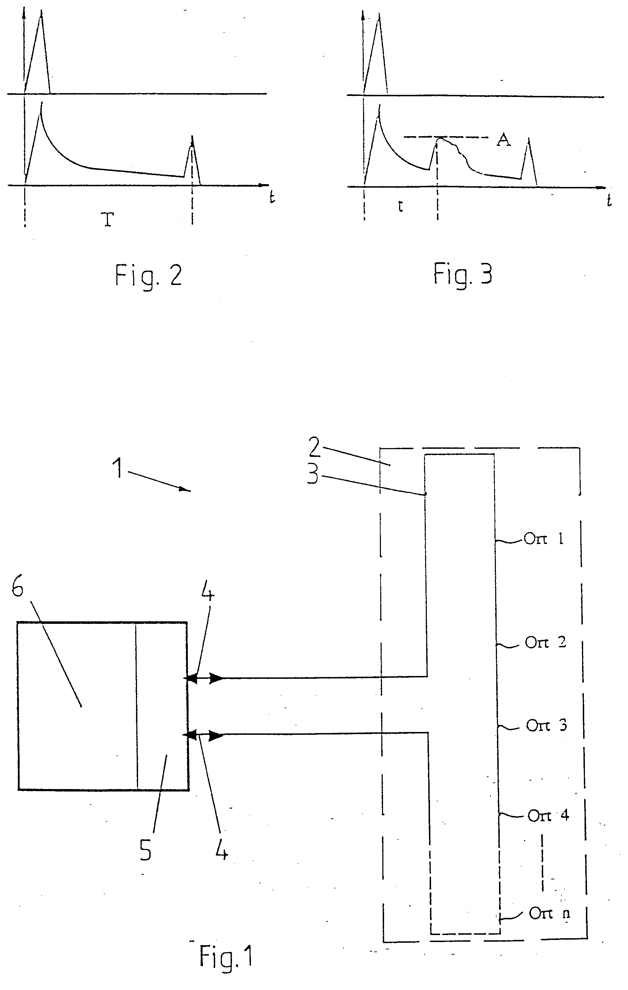

Das an sich bekannte Meßprinzip wird im folgenden anhand der Fign. 2 und 3 näher erläutert.
Wenn man durch ein Glasfaserkabel einen Lichtimpuls sendet, so wird dieser zum Teil reflektiert. Die Reflexionen werden durch Schwankungen in den Brechungseigenschaften des Glases (Rayleigh Effect) oder durch Unterbrechungen des Kabels (Fresnel Effect) verursacht. Bei einem endlich langen Kabel entsteht an dessen Ende eine zusätzliche Fresnel-Reflexion, deren Laufzeit "T" direkt abhängig von der Länge des Glasfaserkabels ist. In Fig. 2 ist stark vereinfacht die Reflexion des Lichtimpulses in einem Leistungs-Zeit-Diagramm dargestellt. Im oberen Diagramm ist der Kurvenverlauf eines eingespeisten Lichtimpulses ersichtlich. Im unteren Diagramm ist der reflektierte Impuls und die durch den Fresnel-Effect entstandene zusätzliche Reflexion am Ende des Kabels dargestellt. Die Zeit "T" bis zum Auftreten der Fresnel-Reflexion ist dabei ein Maß für die Länge des Lichtleiterkabels. Der reflektierte Impuls kann an der Einspeisestelle gemessen werden.

In Fig. 3 ist das Reflexionsverhalten des Lichtimpulses im Glasfaserkabel bei einer Temperaturänderung an einem bestimmten Ort innerhalb des Raumes 2 dargestellt. Im oberen Diagramm ist der Kurvenverlauf eines eingespeisten Lichtimpulses ersichtlich. Im unteren Diagramm ist ein Kurvenverlauf ersichtlich, wenn infolge einer veränderten Temperatur an einem Ort entlang des verlegten Kabels eine erhöhte Reflexion auftritt. Dies ist auf die verstärkten Molekularbewegungen im Glas und die damit verbundenen geänderten Brechungseigenschaften zurückzuführen. Eine erhöhte Temperatur hebt die Amplitude des Rückstreusignals an. Für diesen aufgrund der Temperaturerhöhung auftretenden reflekierten Impuls kann die Zeit "t" und die Amplitude "A" gemessen werden. Aus der Zeitangabe "t" ist der Ort der Temperaturerhöhung entlang des Kabels zu ermitteln. Aus der Höhe der Amplitude des Impulses "A" kann die Temperaturabweichung zum Normalwert ermittelt werden.

Unter Ausnutzung dieser physikalischen Eigenschaften eines Glasfaserkabels ist es möglich, die Temperatur in Räumen mittels eines Glasfaserkabels zu erfassen. Folgende Verfahrenschritte sind dazu vorgesehen, die anhand der in Fig. 1 gezeigten schematischen Darstellung einer Anordnung zur Durchführung des Verfahrens erläutert werden.
Von einer opto-elektronischen Sensorschnittstelle 4 werden mittels eines Lasersenders Lichtimpulse von sehr kurzer Dauer (z.B. 10 pico-sec.) in die Glasfaserschleife 3 eingespeist. Die durch den eingespeisten Impuls auftretenden Reflexionen werden von einem Laserempfänger der Sensorschnittstelle 4 erfaßt und in einer Meßeinrichtung 5 aufbereitet. Die Meßeinrichtung 5 weist einen Auswerterechner auf, der aufgrund der extrem kurzen Laufzeiten der Lichtimpulse sehr leistungsfähig und reaktionsschnell arbeiten muß. Als Meßwert wird einerseits die Zeit zwischen Aussenden und Empfang der Reflexion erfaßt und andererseits die Stärke der Reflexion. Mit einer definierten Zeitspanne "t" kann der Ort einer Temperaturänderung längs des Kabels 3 ermittelt werden. Für das Festellen des Ortes der Temperaturänderung innerhalb des Raumes 2 ist es notwendig, daß das Glasfaserkabel 3 auf der Mantelfläche Längenangaben aufweist oder spezielle Meßpunkte müssen manuell ausgemessen werden.
Die Stärke der Reflexion (Amplitude "A") am Ort der Temperaturänderung ist ein Maß für die Abweichung von der Regeltemperatur. Für die Ermittlung der Temperaturabweichung ist ein Abgleich mit einer Referenztemperatur notwendig, die in der Meß- und Auswerteeinrichtung 5 eingespeichert vorliegt und anhand dessen Ort und Größe der Temperaturdifferenz ermittelt wird.
Die Auswertung der gemessenen Werte erfolgt somit in der Meß- und Auswerteeinrichtung 5, die anhand des Reflexionsverhaltens der Lichtimpulse die Temperatur längs der Glasfaserkabelschleife 3 ermittelt. Die Anzahl der Meßorte und die Definition der Meßorte (Ort 1 bis Ort n) entlang des Kabels 3 erfolgt mittels Dateneingabe an der Meß- und Auswerteeinrichtung 5. Die Meßorte können entsprechend angepaßt werden, wenn es zu Veränderungen im Sitzlayout kommt. So kann flexibel auf Veränderungen reagiert werden, die eine Veränderung der Verteilung der Wärmelasten innerhalb des Raumes 3 bewirken. Eine Kabelverlegung zur Veränderung der Meßposition ist nicht notwendig, was den Konstruktions- und Installationsaufwand erheblich minimiert. Änderungen im Auswertungsprogramm sind vorzusehen, wenn beispielsweise das Glasfaserkabel 3 unterbrochen wird. In einem solchen Fall erfolgt die Impulseinspeisung von beiden Seiten das Kabels 3. Die elektronische Auswertung der Signale muß nunmehr entsprechend dieser Bedingung verändert werden und liefert nach wie vor eine korrekte Angabe der Temperatur, unabhängig vom Ort der Unterbrechung. Mit dieser Maßnahme kann die Zuverlässigkeit der Temperaturmessung erhöht werden, da auch bei einer Trennstelle im Kabel, beispielsweise durch Beschädigungen, eine korrekte Messung möglich ist.

Die Meß-und Auswerteeinrichtung 5 stellt der zugeordneten Temperaturregeleinheit 6 die ermittelten Werte zur Verfügung, die dann für die Steuerung/Regelung des Klimasystems oder anderen Systemen verwendet werden.

In einer nicht gezeigten Ausführungsform kann die Meß- und Auswerteeinrichtung 5 als Zentraleinheit auch für mehrere Glasfaserkabelschleifen 3 vorgesehen sein. Das wäre der Fall, wenn es notwendig wird, mehrere redundante Schleifen 3 zur Erfassung der Temperatur vorzusehen und die erfaßten Temperaturen für die Temperaturregelung eines Systems, beispielsweise des Klimasystems vorgesehen sind.

## Patentansprüche

1. Verfahren zum Temperaturerfassen in Räumen, insbesondere in Passagier- oder Frachträumen in Flugzeugen, wobei über mindestens eine Sensoreinrichtung Meßwerte erfaßt werden, die einer zugeordneten Temperaturregeleinheit zur Verfügung gestellt werden, dadurch gekennzeichnet, daß in die als ein Lichtleitkabel (3) ausgebildete Sensoreinrichtung (1) über eine Sensorschnittstelle (4) Lichtimpulse eingespeist werden, die durch den eingespeisten Impuls auftretenden Reflexionen in ihrer Stärke (Amplitude A) und Zeitdifferenz (t) erfaßt werden, die Meßwerte einer Meß- und Auswerteeinrichtung (5) übergeben werden, in der Meß- und Auswerteeinrichtung (5) die Höhe der Temperaturänderung und den Ort der Temperaturänderung längs des Kabels (3) ermittelt wird und der zugeordneten Temperaturregeleinheit (6) die Werte übergeben werden.

2. Anordnung zum Temperaturerfassen in Räumen, insbesondere in Passagier- oder Frachträumen in Flugzeugen, wobei mindestens eine Sensoreinrichtung mit einer zugeordneten Temperaturregeleinheit verbunden ist, dadurch gekennzeichnet, daß die Sensoreinrichtung (1) aus einem Lichtleitkabel (3) besteht, das zumindest bereichsweise den zu erfassenden Raum (2) abdeckt, die Enden des Kabels (3) eine Verbindung zu einer Sensorschnittstelle (4) aufweisen und die Sensorschnittstelle (4) an eine Meß- und Auswerteeinrichtung (5) angekoppelt ist, die mit der Temperaturregeleinheit (6) verbunden ist.

3. Anordnung nach Anspruch 2,
dadurch gekennzeichnet, daß
das Lichtleitkabel (3) als Glasfaserkabel ausgebildet ist.

4. Anordnung nach einem der Ansprüche 2 oder 3,
dadurch gekennzeichnet, daß
das Glasfaserkabel (3) als Schleife in dem zu erfassenden Raum (2) verlegt ist.

5. Anordnung nach einem der Ansprüche 2 bis 4,
dadurch gekennzeichnet, daß
die Sensorschnittstelle (4) einen Lasersender und einen Laserempfänger aufweist.

6. Anordnung nach einem der Ansprüche 2 bis 5,
dadurch gekennzeichnet, daß
die Meß- und Auswerteeinrichtung (5) als Zentraleinheit für mehrere Kabelschleifen ausgebildet ist.
